# EUROPEAN PATENT APPLICATION

(11) **EP 4 834 995 A1**
(43) Date of publication of application: **04.11.2026**
(21) Application number: 24912850.5
(22) Date of filing: 24.12.2024
(51) Int. Cl.: C08L 29/04, B32B 27/18, B32B 27/30, B65D 65/46, C08K 5/053, C08L 3/04, C08L 101/16, D21H 19/20

(54) **BIODEGRADABLE RESIN COMPOSITION**

(30) Priority: 25.12.2023 JP 2023218158
(71) Applicant: Kuraray Co., Ltd., Kurashiki-shi, Okayama 710-0801 (JP)
(72) Inventor: SEKINE, Kana, Tsukuba-shi, Ibaraki 305-0841 (JP); ENOMOTO, Keisuke, Tokyo 100-0004 (JP); TAKAWA, Shun, Tsukuba-shi, Ibaraki 305-0841 (JP); OTA, Masahiko, Kurashiki-shi, Okayama 713-8550 (JP)
(74) Representative: Müller-Boré & Partner Patentanwälte PartG mbB
(86) International application number: PCT/JP2024/045773
(87) International publication number: WO 2025/142964

(57) **Abstract**

An object of the present invention is to provide a biodegradable resin composition having excellent biodegradability, low-temperature moldability, and oxygen barrier performance under high humidity. The biodegradable resin composition of the present invention includes: a polyvinyl alcohol-based resin (A); a modified starch (B); and a polyol plasticizer (C); wherein the composition has a melting point of not more than 180°C, and wherein the temperature at which the storage elastic modulus of the composition falls below 1000 MPa is not less than 35°C and less than 180°C.

## Description

### TECHNICAL FIELD

The present patent application claims priority under the Paris Convention to Japanese Patent Application No. 2023-218158 (filing date: December 25, 2023), the entire contents of which are incorporated herein by reference.

The present invention relates to a biodegradable resin composition, a molded body comprising the biodegradable resin composition, a laminated body comprising a biodegradable barrier layer composed of the biodegradable resin composition, a film for food packaging or agricultural use comprising the biodegradable barrier layer, and coated paper comprising the biodegradable resin composition and paper, the paper being coated with the composition.

### BACKGROUND ART

Plastic is widely used as a packaging material because of its moldability, strength, water resistance, transparency, and the like. However, plastic has poor biodegradability, and when it is discarded into the natural environment after use, it may remain for a long period of time, causing environmental destruction. In contrast, in recent years, biodegradable resins that are biodegraded or hydrolyzed in soil or water and hence are useful for preventing environmental pollution have attracted attention, and practical application of packaging materials using the biodegradable resins has been promoted. For example, Patent Document 1 describes a biodegradable composition containing starch, polyvinyl alcohol, a plasticizer, and the like.

### PRIOR ART DOCUMENT

### PATENT DOCUMENT

Patent Document 1: JP 5669906 B

### SUMMARY OF THE INVENTION

### PROBLEMS TO BE SOLVED BY THE INVENTION

However, the molding temperature of a conventional biodegradable resin composition is high, and hence reduction of the molding temperature has been demanded. Nevertheless, in cases where an attempt is made to lower the melting point of a biodegradable resin composition from the viewpoint of reducing the molding temperature, the oxygen barrier decreases under high humidity to which a food packaging material may be exposed. It was therefore revealed that low-temperature moldability (for example, at about 180°C) and oxygen barrier performance under high humidity can hardly be achieved at the same time.

Accordingly, an object of the present invention is to provide a biodegradable resin composition, a molded body comprising the biodegradable resin composition, a laminated body comprising a biodegradable barrier layer composed of the biodegradable resin composition, a film for food packaging or agricultural use comprising the biodegradable barrier layer, and coated paper comprising the biodegradable resin composition and paper, the paper being coated with the composition, each of which has excellent biodegradability, low-temperature moldability, and oxygen barrier performance under high humidity.

### SOLUTIONS TO THE PROBLEMS

In order to achieve the above object, the present inventors intensively studied to discover that the above problems can be solved with a biodegradable resin composition comprising: a polyvinyl alcohol-based resin (A); a modified starch (B); and a polyol plasticizer (C); wherein the melting point of the composition and the temperature at which the storage elastic modulus of the composition falls below 1000 MPa are within specific ranges, thereby completing the present invention.

Specifically, the present invention includes the following modes.
[1] A biodegradable resin composition comprising: a polyvinyl alcohol-based resin (A); a modified starch (B); and a polyol plasticizer (C); wherein the composition has a melting point of not more than 180°C, and wherein a temperature at which a storage elastic modulus of the composition falls below 1000 MPa is not less than 35°C and less than 180°C.
[2] The biodegradable resin composition according to [1], wherein the polyvinyl alcohol-based resin (A) has a melting point of not more than 200°C.
[3] The biodegradable resin composition according to [1] or [2], wherein a content of the modified starch (B) is not less than 0.5% by mass with respect to a mass of the biodegradable resin composition.
[4] The biodegradable resin composition according to any one of [1] to [3], wherein Tg of the polyol plasticizer (C) is not less than 50°C.
[5] The biodegradable resin composition according to any one of [1] to [4], wherein the polyol plasticizer (C) comprises trehalose.
[6] The biodegradable resin composition according to any one of [1] to [5], wherein a content of the polyol plasticizer (C) is 5 to 80% by mass with respect to a mass of the biodegradable resin composition.
[7] A molded body comprising the biodegradable resin composition according to any one of [1] to [6].
[8] The molded body according to [7], which is a film.
[9] A laminated body comprising a biodegradable barrier layer composed of the biodegradable resin composition according to any one of [1] to [6].
[9] Coated paper comprising the biodegradable resin composition according to any one of [1] to [6] and paper, the paper being coated with the composition.
[10] A film for food packaging or agricultural use, comprising a biodegradable barrier layer composed of the biodegradable resin composition according to any one of [1] to [6].

### EFFECTS OF THE INVENTION

According to the present invention, a biodegradable resin composition having excellent biodegradability, low-temperature moldability, and oxygen barrier performance under high humidity can be provided.

### DETAILED DESCRIPTION

Embodiments of the present invention are described below in detail. The scope of the present invention is not limited to the embodiments described herein, and various modifications can be made without departing from the spirit of the present invention. A plurality of upper limit values and lower limit values described in the present description may be arbitrarily combined to provide a preferred numerical range.

### [Biodegradable Resin Composition]

The biodegradable resin composition of the present invention comprises a polyvinyl alcohol-based resin (A), a modified starch (B), and a polyol plasticizer (C), wherein the composition has a melting point of not more than 180°C, and wherein the temperature at which the storage elastic modulus of the composition falls below 1000 MPa is not less than 35°C and less than 180°C. In the present description, the polyvinyl alcohol-based resin (A) may be referred to as a "PVA-based resin (A)," and the biodegradable resin composition may be simply referred to as a "composition."

In the present description, "biodegradable" means, for example, having a property of being chemically degradable by an action such as hydrolysis, enzymatic degradation, microbial degradation, or the like. In the present description, a "biodegradable resin composition" represents a material that conforms to the biodegradability criteria specified in ISO14851, and is a material with a degree of biodegradation of not less than 70% as determined by the method described in Examples.

The present inventors unexpectedly discovered that a biodegradable resin composition comprising: a PVA-based resin (A); a modified starch (B); and a polyol plasticizer (C); can achieve improvement in biodegradability, low-temperature moldability, and oxygen barrier performance under high humidity in cases where the melting point of the composition is adjusted to not more than 180°C, and where the temperature at which the storage elastic modulus of the composition falls below 1000 MPa is adjusted to not less than 35°C and less than 180°C. Although the reason for the improvement is unclear, the composition has relatively low crystallinity and improved low-temperature moldability in cases where the melting point of the composition is not more than 180°C. Meanwhile, although decreased crystallinity generally tends to cause reduction of oxygen barrier performance under high humidity, adjustment of the temperature at which the storage elastic modulus falls below 1000 MPa to not less than 35°C and less than 180°C enables suppression of mobility of an amorphous portion while maintaining low-temperature moldability. This is assumed to be the reason for the improvement of oxygen barrier performance under high humidity.

The melting point of the composition of the present invention is not more than 180°C, preferably not more than 178°C, preferably not more than 175°C, preferably not more than 173°C, more preferably not more than 170°C, and is preferably not less than 150°C, preferably not less than 155°C, preferably not less than 160°C, more preferably not less than 165°C. The melting point of the composition of the present invention is preferably 150 to 180°C, still more preferably 160 to 170°C. In cases where the melting point of the composition is not more than the upper limit described above, the composition can have enhanced low-temperature moldability, while in cases where the melting point of the composition is not less than the lower limit described above, the composition tends to have improved gas barrier performance, strength, and stability. The melting point of the composition can be measured using a differential scanning calorimeter (DSC), and can be measured by the method described in Examples. The melting point of the composition may be adjusted to fall within the range described above depending on the types, contents, production methods, and the like of the PVA-based resin (A), the modified starch (B), and the polyol plasticizer (C). For example, the melting point may be adjusted to fall within the range described above by using later-described preferred modes of the PVA-based resin (A), the modified starch (B), and the polyol plasticizer (C), by using these components at later-described preferred contents, or by employing a later-described preferred production method. In particular, the melting point of the composition tends to decrease as the degree of saponification of the PVA-based resin (A) decreases, and/or as the content of the polyol plasticizer (C) increases.

The temperature at which the storage elastic modulus of the composition of the present invention falls below 1000 MPa (or the temperature at which the storage elastic modulus becomes less than 1000 MPa) is not less than 35°C, preferably not less than 40°C, more preferably not less than 50°C, still more preferably not less than 60°C, still more preferably not less than 70°C, especially preferably not less than 80°C, and is less than 180°C, preferably not more than 165°C, preferably not more than 160°C, more preferably not more than 155°C, more preferably not more than 150°C, more preferably not more than 145°C, more preferably not more than 140°C, still more preferably not more than 135°C, still more preferably not more than 130°C, especially preferably not more than 120°C, not more than 110°C, or not more than 100°C. The temperature at which the storage elastic modulus falls below 1000 MPa is not less than 35°C and less than 180°C, preferably not less than 40°C and less than 180°C, more preferably 50 to 165°C, still more preferably 60 to 150°C, still more preferably 70 to 135°C, especially preferably 80 to 130°C, and may be, for example, 80 to 120°C, 80 to 110°C, or 80 to 100°C. In cases where the temperature at which the storage elastic modulus falls below 1000 MPa is not less than the lower limit described above, mobility of an amorphous portion of the composition can be further suppressed, so that the oxygen barrier performance under high humidity can be further improved. In cases where the temperature at which the storage elastic modulus falls below 1000 MPa is not more than the upper limit described above, a decrease in low-temperature moldability of the composition can be suppressed. The temperature at which the storage elastic modulus of the composition falls below 1000 MPa means the temperature at which the storage elastic modulus becomes less than 1000 MPa as determined by measurement using a dynamic viscoelasticity apparatus under conditions where heating is performed from - 50°C to 200°C at a rate of 3°C/minute. The measurement can be carried out by the method described in Examples. The temperature at which the storage elastic modulus of the composition falls below 1000 MPa can be adjusted to fall within the range described above depending on the types, contents, production methods, and the like of the PVA-based resin (A), the modified starch (B), and the polyol plasticizer (C). For example, this temperature may be adjusted by using later-described preferred modes of the PVA-based resin (A), the modified starch (B), and the polyol plasticizer (C), by using these components at later-described preferred contents, or by employing a later-described preferred production method. In particular, the temperature at which the storage elastic modulus falls below 1000 MPa tends to increase as the Tg of the polyol plasticizer (C) to be used increases.

### [Polyvinyl Alcohol-Based Resin (A)]

The biodegradable resin composition of the present invention comprises a PVA-based resin (A). The PVA-based resin (A) may be one type of PVA-based resin or may be a mixture of two or more types of PVA-based resins. The degree of saponification of the PVA-based resin (A) is preferably not less than 73 mol%, more preferably not less than 80 mol%, preferably not less than 83 mol%, more preferably not less than 85 mol%, and is preferably not more than 99.9 mol%, more preferably not more than 95 mol%, still more preferably not more than 90 mol%. The degree of saponification of the PVA-based resin (A) is preferably 73 to 99.9 mol%, more preferably 80 to 95 mol%, more preferably 83 to 95 mol%, more preferably 83 mol% to 90 mol%, especially preferably 85 mol% to 90 mol%. In cases where the degree of saponification is within the range described above, the composition can have enhanced low-temperature moldability, and enhanced oxygen barrier performance under high humidity. In the present description, the degree of saponification means the molar fraction of hydroxyl groups relative to the total of hydroxyl groups and ester groups in the PVA-based resin (A), and can be measured in accordance with JIS K6726. In cases where two or more types of PVA-based resins are used, the degree of saponification of the PVA-based resin (A) can be determined by measuring the degree of saponification after mixing the two or more types of PVA-based resins.

As long as the effect of the present invention is not impaired, the PVA-based resin (A) may be a polyvinyl alcohol containing a vinyl alcohol unit, or may be a modified polyvinyl alcohol containing, in addition to the vinyl alcohol unit, another monomer unit (also referred to as a structural unit derived from another monomer).

In one embodiment of the present invention, the melting point of the PVA-based resin (A) is preferably not more than 200°C, more preferably not more than 195°C, still more preferably not more than 190°C, and is preferably not less than 160°C, more preferably not less than 170°C, more preferably not less than 180°C. The melting point of the PVA-based resin (A) is preferably 160 to 200°C, more preferably 170 to 195°C, still more preferably 180 to 190°C. In cases where the melting point of the PVA-based resin (A) is not more than the upper limit described above, the composition can have enhanced low-temperature moldability, while in cases where the melting point is not less than the lower limit described above, the composition tends to have improved gas barrier performance. The melting point of the PVA-based resin (A) can be measured using a differential scanning calorimeter (DSC), and can be measured by the method described in Examples. In cases where two or more types of PVA-based resins are used, the melting point of the PVA-based resin (A) can be determined by measuring the melting point after mixing the two or more types of PVA-based resins.

The viscosity-average degree of polymerization (which may be referred to as the degree of polymerization) of the PVA-based resin (A) is preferably 200 to 3000, more preferably 300 to 2000, still more preferably 300 to 1500, especially preferably 500 to 1000. In cases where the degree of polymerization is not less than the lower limit described above, the oxygen barrier performance under high humidity can be improved, while in cases where the degree of polymerization is not more than the upper limit described above, the low-temperature moldability can be enhanced. The degree of polymerization of the PVA-based resin (A) can be measured in accordance with JIS-K6726. Specifically, the degree of polymerization is determined by resaponifying and purifying the PVA-based resin, measuring the limiting viscosity [η] (dl/g) in water at 30°C, and then performing calculation according to the following equation (P: viscosity-average degree of polymerization). $P = \left(\left[η\right]\times {10}^{3}/8.29\right) \left(1/0.62\right)$

In cases where two or more types of PVA-based resins are used, the viscosity-average degree of polymerization of the PVA-based resin (A) can be determined by measuring the viscosity-average degree of polymerization after mixing the two or more types of PVA-based resins.

The method of producing the PVA-based resin (A) is not particularly limited, and examples of the method include a method in which vinyl alcohol monomers and, optionally, the other monomer are copolymerized, and the resulting copolymer is saponified to convert the copolymer into vinyl alcohol units. Examples of the polymerization mode in the copolymerization include batch polymerization, semi-batch polymerization, continuous polymerization, and semi-continuous polymerization. Examples of the polymerization method include known methods such as bulk polymerization, solution polymerization, suspension polymerization, and emulsion polymerization. The saponification of the copolymer can be performed by applying a known method. For example, the saponification can be performed in a state where the copolymer is dissolved in alcohol or aqueous alcohol. As the alcohol in this process, a lower alcohol such as methanol or ethanol may be preferably used.

In one embodiment of the present invention, the content of the PVA-based resin (A) with respect to the mass of the composition is preferably not less than 0.5% by mass, more preferably not less than 5% by mass, more preferably not less than 8% by mass, more preferably not less than 15% by mass, more preferably not less than 25% by mass, especially preferably not less than 35% by mass, and is preferably not more than 80% by mass, preferably not more than 70% by mass, preferably not more than 60% by mass, preferably not more than 55% by mass, more preferably not more than 50% by mass, still more preferably not more than 45% by mass. The content of the PVA-based resin (A) with respect to the mass of the composition is preferably 0.5 to 80% by mass, more preferably 1 to 70% by mass, still more preferably 5 to 65% by mass, still more preferably 15 to 60% by mass, especially preferably 25 to 55% by mass, especially preferably 35 to 50% by mass, especially preferably 35 to 45% by mass. In cases where the content of the PVA-based resin (A) is not less than the lower limit described above, the oxygen barrier performance under high humidity, the low-temperature moldability, and the mechanical strength can be enhanced, while in cases where the content of the PVA-based resin (A) is not more than the upper limit described above, the biomass ratio can be increased.

In one embodiment of the present invention, the content of the PVA-based resin (A), based on a total of 100 parts by mass of the PVA-based resin (A) and the modified starch (B), is preferably not less than 5 parts by mass, more preferably not less than 10 parts by mass, more preferably not less than 15 parts by mass, more preferably not less than 25 parts by mass, more preferably not less than 35 parts by mass, still more preferably not less than 45 parts by mass, still more preferably not less than 55 parts by mass, especially preferably not less than 65 parts by mass, and is preferably not more than 98 parts by mass, more preferably not more than 95 parts by mass, more preferably not more than 90 parts by mass, especially preferably not more than 85 parts by mass. The content of the PVA-based resin (A), based on a total of 100 parts by mass of the PVA-based resin (A) and the modified starch (B), is preferably 5 to 98 parts by mass or 10 to 98 parts by mass, more preferably 15 to 95 parts by mass, still more preferably 25 to 95 parts by mass or 35 to 95 parts by mass, still more preferably 45 to 90 parts by mass or 55 to 90 parts by mass, especially preferably 65 to 85 parts by mass or 75 to 85 parts by mass. In cases where the content of the PVA-based resin (A) is not less than the lower limit described above, the oxygen barrier performance under high humidity, the low-temperature moldability, and the mechanical strength can be enhanced, while in cases where the content of the PVA-based resin (A) is not more than the upper limit described above, the biodegradability can be enhanced.

### [Modified Starch (B)]

The biodegradable resin composition of the present invention comprises a modified starch (B). The starch to be used as a raw material of the modified starch (B) may be, for example, starch derived from maize, cassava, potato, sweet potato, sago, tapioca, sorghum, bean, bracken, lotus, water chestnut, wheat, rice, oat, arrowroot, pea, or the like. Among these, from the viewpoint of the amylose content, the starch to be used as a raw material of the modified starch (B) is preferably starch derived from maize (corn) or cassava, more preferably starch derived from maize. The modified starch (B) may be composed of one type of starch or two or more types of starch. The modified starch (B) contains a modified group formed by modification of a hydroxy group contained in starch.

In one embodiment of the present invention, the average amylose content of the modified starch (B) is preferably 0.1 to 95% by mass, more preferably 0.3 to 90% by mass, still more preferably 0.3 to 85% by mass, still more preferably 0.5 to 80% by mass, still more preferably 0.7 to 75% by mass, especially preferably 0.7 to 70% by mass, especially preferably 0.7 to 65% by mass, especially preferably 0.7 to 10% by mass. In cases where the average amylose content is within the range described above, the composition can have enhanced oxygen barrier performance under high humidity, and low-temperature moldability. In the present description, the amylose content can be measured by, for example, the iodine colorimetric method described in "Starch 50 No. 4 158-163 (1998)". In the present description, in cases where the modified starch is of a single type, the average amylose content refers to the amylose content of the single type of modified starch. In cases where two or more types of modified starches are used, the average amylose content refers to the weighted average of the amylose contents of the two or more types of modified starches. Thus, for example, in cases where two or more types of modified starches are used and the average amylose content is set to less than 50% by mass, the modified starches may include a modified starch having an amylose content of not less than 50% by mass.

In one embodiment of the present invention, the weight-average molecular weight (Mw) of the modified starch (B) is preferably 5000 to 800,000, more preferably 10,000 to 650,000, still more preferably 20,000 to 550,000, especially preferably 25,000 to 100,000. In cases where the Mw of the modified starch (B) is not less than the lower limit described above, the oxygen barrier performance under high humidity can be improved, while in cases where the Mw is not more than the upper limit described above, the low-temperature moldability can be enhanced. In the present description, the weight-average molecular weight can be measured using gel permeation chromatography (GPC), and can be measured by the method described in Examples.

The modified starch (B) preferably contains a hydrophobically modified starch containing a modified group formed by modification with a hydrophobic compound having an SP value of not more than 11.3 (the modified group may be referred to as a hydrophobic compound-modified group). Such a case is advantageous from the viewpoint of the oxygen barrier performance under high humidity, and the low-temperature moldability. In the present description, the SP value refers to a solubility parameter calculated by the Fedors equation (Polym. Eng. Sci., 14[2], 147 (1974)).

The hydrophobic compound-modified group is a group formed by modification of a hydroxy group contained in starch, through reaction between a reactive group of the hydrophobic compound and the hydroxy group. The hydrophobic compound-modified group is preferably bonded to the starch through etherification, esterification, or amidation. The reactive group may be, for example, at least one selected from the group consisting of a halogen group, a halohydrin group, an epoxy group, a glycidyl group, an acid anhydride group, and an amino group. The hydrophobically modified starch is preferably at least one type selected from the group consisting of etherified starch, esterified starch, and amidated starch.

In cases where the hydrophobic compound is etherified, that is, bonded to the starch through an ether bond, the reactive group contained in the hydrophobic compound may be, for example, a halogen group, a halohydrin group, an epoxy group, or a glycidyl group, and the hydrophobic compound is preferably a hydrophobic compound having 6 to 24 carbon atoms. Specific examples of the hydrophobic compound include cetyl bromide and lauryl bromide; epoxidized soybean fatty alcohol and epoxidized linseed fatty alcohol; and glycidyl ethers having 2 to 24 carbon atoms, such as allyl glycidyl ether, propyl glycidyl ether, butyl glycidyl ether, decane glycidyl ether, laurylphenyl glycidyl ether, myristoyl glycidyl ether, cetyl glycidyl ether, palmityl glycidyl ether, stearyl glycidyl ether, and linolyl glycidyl ether; preferably glycidyl ethers having 6 to 24 carbon atoms.

In cases where the hydrophobic compound is esterified, that is, bonded to the starch through an ester bond, the reactive group contained in the hydrophobic compound may be, for example, an acid anhydride group, and the hydrophobic compound is preferably a carboxylic acid anhydride having 6 to 24 carbon atoms, preferably having 7 to 20 carbon atoms. Specific examples of the carboxylic acid anhydride include alkanoic carboxylic acid anhydrides, such as octanoic acetic anhydride, decanoic acetic anhydride, lauric acetic anhydride, and myristic acetic anhydride; and alkyl or alkenyl dicarboxylic acid anhydrides, such as alkyl or alkenyl succinic anhydride and alkyl or alkenyl maleic anhydride. The alkyl or alkenyl dicarboxylic acid anhydride is preferably octenyl succinic anhydride (SP value: 10.4), nonyl succinic anhydride, decyl succinic anhydride, dodecenyl succinic anhydride, octenyl maleic anhydride, nonyl maleic anhydride, decyl maleic anhydride, or dodecenyl maleic anhydride, more preferably octenyl succinic anhydride or octenyl maleic anhydride.

In cases where the hydrophobic compound is amidated, that is, bonded to the starch through an amide bond, the reactive group contained in the hydrophobic compound may be, for example, an amino group, and, as the hydrophobic compound, an aliphatic amine containing a saturated or unsaturated hydrocarbon group having 6 to 24 carbon atoms can be suitably used. The aliphatic amine is preferably linear although it may contain a branched chain. Specific examples of the aliphatic amine include n-dodecylamine, n-hexadecylamine, n-octadecylamine, cocoamine, tallow amine, hydrogenated N-tallow-1,3-diaminopropane, N-hydrogenated tallow-1,3-diaminopropane, and N-oleyl-1,3-diaminopropane.

Among these, from the viewpoint of enhancing the oxygen barrier performance under high humidity and the low-temperature moldability of the composition, the hydrophobically modified starch is preferably at least one selected from the group consisting of etherified starch containing a glycidyl ether-modified group having 6 to 24 carbon atoms (etherified starch containing a structural unit derived from a glycidyl ether) and esterified starch containing a carboxylic acid anhydride-modified group having 6 to 24 carbon atoms (esterified starch containing a structural unit derived from a carboxylic acid anhydride).

In one embodiment of the present invention, in cases where the modified starch (B) contains a hydrophobically modified starch, the content of the hydrophobically modified starch with respect to the mass of the modified starch (B) is, for example, not less than 10% by mass, preferably not less than 30% by mass, still more preferably not less than 50% by mass, still more preferably not less than 70% by mass, preferably not less than 75% by mass, preferably not less than 80% by mass, more preferably not less than 85% by mass, more preferably not less than 90% by mass, or 100% by mass.

In one embodiment of the present invention, the content of the modified starch (B) with respect to the mass of the biodegradable resin composition is not less than 0.5% by mass, more preferably not less than 1% by mass, more preferably not less than 3% by mass, more preferably not less than 5% by mass, especially preferably not less than 8% by mass, and is preferably not more than 80% by mass, preferably not more than 70% by mass, preferably not more than 60% by mass, preferably not more than 50% by mass, preferably not more than 45% by mass, preferably not more than 35% by mass, preferably not more than 25% by mass, more preferably not more than 15% by mass. The content is preferably 0.5 to 80% by mass, more preferably 1 to 70% by mass, still more preferably 3 to 60% by mass, still more preferably 3 to 50% by mass, especially preferably 5 to 45% by mass or 5 to 35% by mass, especially preferably 7 to 25% by mass or 8 to 15% by mass. In cases where the content of the modified starch (B) is not less than the lower limit described above, the biodegradability can be improved, while in cases where the content of the modified starch (B) is not more than the upper limit described above, the oxygen barrier performance under high humidity, the low-temperature moldability, and the mechanical strength can be enhanced.

In one embodiment of the present invention, the content of the modified starch (B), based on a total of 100 parts by mass of the PVA-based resin (A) and the modified starch (B), is preferably not less than 2 parts by mass, more preferably not less than 5 parts by mass, more preferably not less than 8 parts by mass, more preferably not less than 10 parts by mass, more preferably not less than 15 parts by mass, and is preferably not more than 95 parts by mass, preferably not more than 90 parts by mass, preferably not more than 85 parts by mass, preferably not more than 75 parts by mass, more preferably not more than 65 parts by mass, more preferably not more than 55 parts by mass, more preferably not more than 45 parts by mass, more preferably not more than 35 parts by mass, more preferably not more than 25 parts by mass. The content is preferably 2 to 95 parts by mass or 2 to 90 parts by mass, more preferably 5 to 85 parts by mass, still more preferably 5 to 75 parts by mass or 5 to 65 parts by mass, still more preferably 10 to 55 parts by mass or 10 to 45 parts by mass, especially preferably 15 to 35 parts by mass or 15 to 25 parts by mass. In cases where the content of the modified starch (B) is not less than the lower limit described above, the biodegradability can be improved, while in cases where the content of the modified starch (B) is not more than the upper limit described above, the oxygen barrier performance under high humidity, the low-temperature moldability, and the mechanical strength can be enhanced.

### [Polyol Plasticizer (C)]

The biodegradable resin composition of the present invention comprises a polyol plasticizer (C). By the inclusion of the polyol plasticizer (C), the melting point of the composition can be reduced, and the low-temperature moldability can be improved.

In one embodiment of the present invention, the glass transition temperature (Tg) of the polyol plasticizer (C) is not limited as long as the melting point of the composition and the temperature at which the storage elastic modulus falls below 1000 MPa are within the ranges described above. The glass transition temperature is preferably not less than 50°C. By inclusion of a polyol plasticizer (C) having a Tg of not less than 50°C, mobility of an amorphous portion of the composition can be suppressed, and the oxygen barrier performance under high humidity can be improved. The Tg of the polyol plasticizer (C) is preferably not less than 50°C, more preferably not less than 70°C, still more preferably not less than 90°C, still more preferably not less than 110°C, and is preferably not more than 250°C, more preferably not more than 200°C, still more preferably not more than 180°C, still more preferably not more than 150°C. The Tg of the polyol plasticizer (C) is preferably 50 to 250°C, more preferably 70 to 200°C, still more preferably 90 to 180°C, still more preferably 110 to 150°C. In cases where the Tg of the polyol plasticizer (C) is not less than the lower limit described above, the oxygen barrier performance under high humidity can be further improved, while in cases where the Tg of the polyol plasticizer (C) is not more than the upper limit described above, the low-temperature moldability can be further improved.

The type of the polyol plasticizer (C) is not limited as long as the melting point of the composition and the temperature at which the storage elastic modulus falls below 1000 MPa are within the ranges described above. Examples of the polyol plasticizer (C) include polyhydric alcohols such as trehalose and maltitol. The polyol plasticizer (C) preferably contains trehalose from the viewpoint of being able to exhibit excellent oxygen barrier performance under high humidity while enhancing the low-temperature moldability.

In cases where the polyol plasticizer (C) contains trehalose, the content of trehalose with respect to the mass of the polyol plasticizer (C) may be, for example, not less than 50% by mass, preferably not less than 70% by mass, more preferably not less than 80% by mass, not less than 90% by mass, or 100% by mass.

A single polyol plasticizer (C) may be used, or two or more polyol plasticizers (C) may be used in combination.

In one embodiment of the present invention, in cases where, for example, the degree of saponification and the modification level of the PVA-based resin are adjusted to reduce the crystallinity of the composition to thereby enhance the low-temperature solubility, the oxygen barrier performance tends to decrease. However, when a polyol plasticizer having a Tg of not less than 50°C, more preferably trehalose, is used as the polyol plasticizer (C), the polyol plasticizer unexpectedly suppresses mobility of an amorphous portion of the composition. This is thought to enable effective suppression of the decrease in the oxygen barrier performance under high humidity. Thus, preferably by the use of a polyol plasticizer having a Tg of not less than 50°C, more preferably by the use of trehalose, both low-temperature solubility and oxygen barrier performance under high humidity can be achieved at high levels. Further, even in cases where, for example, the degree of saponification and the modification level of the PVA-based resin are adjusted to reduce the number of hydrogen bonds in the composition in order to lower the melting point of the composition, preferably a polyol plasticizer having a Tg of not less than 50°C, more preferably trehalose, enters a portion where oxygen can no longer be blocked by hydrogen bonds, to enable effective suppression of intrusion of oxygen. This is thought to enable effective production of the effect of the present invention.

In one embodiment of the present invention, the content of the polyol plasticizer (C) with respect to the mass of the biodegradable resin composition is preferably not less than 5% by mass, more preferably not less than 10% by mass, more preferably not less than 20% by mass, more preferably not less than 30% by mass, especially preferably 40% by mass, especially preferably not less than 45% by mass, and is preferably not more than 80% by mass, preferably not more than 70% by mass, preferably not more than 65% by mass, preferably not more than 60% by mass, more preferably not more than 55% by mass. The content of the polyol plasticizer (C) with respect to the mass of the biodegradable resin composition is preferably 5 to 80% by mass, more preferably 10 to 75% by mass, still more preferably 20 to 70% by mass, still more preferably 30 to 65% by mass, especially preferably 40 to 60% by mass, especially preferably 45 to 55% by mass. In cases where the content of the polyol plasticizer (C) is within the range described above, low-temperature solubility and oxygen barrier performance under high humidity of the composition can be enhanced.

In one embodiment of the present invention, the content of the polyol plasticizer (C), based on a total of 100 parts by mass of the modified starch (A) and the polyvinyl alcohol-based resin (B), is preferably not less than 5 parts by mass, more preferably not less than 10 parts by mass, more preferably not less than 25 parts by mass, more preferably 40 parts by mass, more preferably not less than 50 parts by mass, more preferably not less than 70 parts by mass, still more preferably not less than 90 parts by mass, and is preferably not more than 400 parts by mass, preferably not more than 300 parts by mass, preferably not more than 250 parts by mass, preferably not more than 200 parts by mass, preferably not more than 150 parts by mass, more preferably not more than 130 parts by mass, more preferably not more than 120 parts by mass, more preferably not more than 110 parts by mass. The content of the polyol plasticizer (C), based on a total of 100 parts by mass of the modified starch (A) and the polyvinyl alcohol-based resin (B), is preferably 5 to 400 parts by mass, more preferably 10 to 300 parts by mass, still more preferably 25 to 250 parts by mass, still more preferably 50 to 200 parts by mass, especially preferably 70 to 150 parts by mass, especially preferably 90 to 110 parts by mass. In cases where the content of the polyol plasticizer (C) is within the range described above, low-temperature solubility and oxygen barrier performance under high humidity of the composition can be enhanced.

### [Biodegradable Resin Composition]

The biodegradable resin composition of the present invention comprises a PVA-based resin (A), a modified starch (B), and a polyol plasticizer (C). The composition has a melting point of not more than 180°C, and the temperature at which the storage elastic modulus of the composition falls below 1000 MPa is not less than 35°C and less than 180°C. Therefore, the composition is excellent in biodegradability, low-temperature moldability, and oxygen barrier performance under high humidity. Thus, the biodegradable resin composition of the present invention can be suitably used as a food packaging material or the like.

The biodegradable resin composition of the present invention may comprise another plasticizer in addition to the polyol plasticizer. Examples of the other plasticizer include water, epoxidized linseed oil, epoxidized soybean oil, tributyl citrate, acetyl triethyl citrate, glyceryl triacetate, and a plasticizer resin.

When necessary, as long as the object and the effect of the present invention are not impaired, the biodegradable resin composition of the present invention may also comprise an additive, and examples of the additive include clay; a fatty acid salt; a filler; a processing stabilizer such as a copper compound; a weathering stabilizer; a colorant; an ultraviolet absorber; a heat stabilizer; a light stabilizer; an antioxidant; an antistatic agent; a flame retardant; a lubricant; a fragrance; a blowing agent; a deodorant; a bulking agent; a peeling agent; a mold release agent; a reinforcing material; an antifungal agent; a preservative; and a crystallization rate retarder. A single additive may be used, or two or more additives may be used in combination. In one embodiment of the present invention, the content (or the total content) of the additive is not particularly limited, and may be appropriately selected depending on the type of the additive. The content may be, for example, 0 to 10% by mass, 0 to 5% by mass, 0 to 1% by mass, 0 to 0.1% by mass, or 0 to 0.01% by mass, with respect to the mass of the biodegradable resin composition.

In one embodiment of the present invention, the oxygen transmission rate (unit: cc·20 µm/(m²·day·atm)) of the biodegradable resin composition of the present invention at a temperature of 23°C and a relative humidity of 75% is preferably not more than 10, more preferably not more than 5.0, still more preferably not more than 3.0, still more preferably not more than 2.0, especially preferably not more than 1.0, especially preferably not more than 0.5. In cases where the oxygen transmission rate at a temperature of 23°C and a relative humidity of 75% is not more than the upper limit described above, excellent oxygen barrier performance under high humidity can be exhibited. The oxygen transmission rate can be measured in accordance with JIS K 7126-1:2006 using a gas permeability measurement apparatus after conditioning for one week under conditions of a temperature of 23°C and a relative humidity of 75%. The oxygen transmission rate is an amount of permeation determined assuming a thickness of 20 µm, and can be measured by the method described in Examples.

The biodegradable resin composition of the present invention has a degree of biodegradation not less than 70%, preferably not less than 80%, more preferably not less than 90% in a biodegradability test in accordance with ISO14851. The degree of biodegradation can be measured in accordance with ISO14851, and can be measured by the method described in Examples.

The biodegradable resin composition of the present invention may be in the form of a molded body described later, for example, a pellet, a film, or a sheet.

### [Method of Producing Biodegradable Resin Composition]

The method of producing the biodegradable resin composition of the present invention is not particularly limited. The method preferably comprises the steps of: (1) mixing the PVA-based resin (A), the modified starch (B), and the polyol plasticizer (C) to obtain a mixture; and (2) extruding, cooling, and drying the mixture.

Step (1) is a step of mixing the PVA-based resin (A), the modified starch (B), and the polyol plasticizer (C). Optionally, other components such as the above-described additives may be mixed together.

Step (1) is usually performed using an extruder. In the extruder, shear stress is applied to the components by a screw, and the components are homogeneously mixed while being heated by application of external heat to the barrel.

As the extruder, for example, a twin-screw extruder may be used. The twin-screw extruder may be either a co-rotating twin-screw extruder or a counterrotating twin-screw extruder. The screw diameter may be, for example, 15 to 150 mm, and the ratio between the extruder length (L) and the screw diameter (D) (L/D ratio) may be, for example, 20 to 60. The screw rotation speed is preferably 80 to 500 rpm, more preferably 150 to 300 rpm. The extrusion molding pressure is preferably not less than 5 bar (0.5 MPa), more preferably not less than 10 bar (1.0 MPa). Each component may be directly introduced into the extruder. Alternatively, these components may be preliminarily mixed using a mixer, and the resulting mixture may be introduced into the extruder.

From the viewpoint of increasing the mixability of the composition, water may be added in Step (1). However, in one embodiment of the present invention, the biodegradable resin composition has excellent melt moldability, and hence can be melt-molded, for example, without adding water as a plasticizer to the extruder.

The modified starch (B) may be subjected to cooking treatment by a combination of heat, shear stress, and optionally water, to be gelatinized (gelled). Here, the cooking treatment is a treatment of crushing starch granules and gelling the crushed starch granules.

The temperature of the extruder (the temperature during kneading) is preferably 30 to 250°C, more preferably 45 to 200°C. The temperature during the cooking treatment is preferably 100 to 220°C, more preferably 150 to 200°C, still more preferably 170 to 190°C. The heating may be performed by applying heat to the barrel of the extruder from outside. By setting the temperature of each barrel in a stepwise manner, heating to a target temperature can be achieved. In cases where the cooking treatment is performed at a temperature of not less than 120°C, advantageous processability can be achieved.

The residence time in the extruder may be set according to a temperature profile and the screw speed, and is preferably 1 to 10 minutes.

In Step (2), in which the mixture is extruded, cooled, and dried, the molten mixture that has been conveyed through the extruder while being melt-kneaded is extruded from a die, and cooled and dried. The temperature of the die is preferably 100 to 220°C, more preferably 150 to 200°C, still more preferably 170 to 190°C.

The mixture (molten product) can be extruded, for example, into a film-like shape or a sheet-like shape, or into a strand-like shape.

In cases where the mixture is extruded into a film-like shape or a sheet-like shape, the mixture may be extruded from a film-forming die, and then cooled and dried while being wound up by a take-up roller. Between the die and the roller, the mixture is preferably cooled so as to prevent the mixture from adhering to the roller. For drying, the roll may be heated, or dehumidified air may be supplied during winding. In the case of a blown tube method, the dehumidified air may be used to expand the film when the film exits from the die. Talc may also be entrained in an air stream to prevent blocking of the film.

In cases where the mixture is extruded into a strand-like shape, the strand may be formed into a pellet shape by extruding the mixture from a multi-hole strand nozzle and then cutting it with a rotary cutter. In order to prevent agglomeration of the pellet, vibration may be applied periodically or continuously, and moisture in the pellet may be removed by using hot air, dehumidified air, or an infrared heater.

The biodegradable resin composition of the present invention, preferably a pellet of the biodegradable resin composition, can be melt-molded into a molded article having any shape such as a film, a sheet, a tube, or a bottle. Examples of the melt molding method include conventional methods such as an extrusion molding method, an injection molding method, a film extrusion method from a T-die, an inflation film-forming method, a compression molding method, a transfer molding method, a reinforced plastic molding method, a hollow molding method, a press molding method, a blow molding method, a calender molding method, a foam molding method, a vacuum forming method, and a pressure forming method.

In one embodiment of the present invention, in cases where the biodegradable resin composition (for example, a pellet) is compression-molded, a molded article can be produced using a conventional compression molding machine. The temperature during compression molding may be appropriately adjusted depending on the use, and may be, for example, 100 to 300°C, preferably 120 to 250°C. The load may be, for example, 50 to 200 kgf/cm², preferably 70 to 150 kgf/cm².

In one embodiment of the present invention, in cases where the biodegradable resin composition (for example, a pellet) is extrusion-molded, a molded article can be produced using a conventional extruder, preferably a twin-screw extruder. Examples of the extrusion conditions include conditions similar to those described in the section of Example 1 [Method of Producing Biodegradable Resin Composition].

### [Molded Body]

The present invention encompasses a molded body comprising the biodegradable resin composition of the present invention. Since the molded body of the present invention comprises the biodegradable resin composition, it has excellent biodegradability, low-temperature moldability, and oxygen barrier performance under high humidity. The form of the molded body is not particularly limited as long as the molded body is obtained by molding the composition, and examples of the form include a pellet, a film, a sheet, a tube, and a bottle. From the viewpoint of ease of use as a food packaging material or the like, a film can be suitably used. As a molding method, those exemplified above may be used.

In one embodiment of the present invention, the content of the biodegradable resin composition in the molded body with respect to the mass of the molded body is preferably 50 to 100% by mass, more preferably 70 to 100% by mass, still more preferably 90 to 100% by mass. The molded body especially preferably consists of the biodegradable resin composition.

In cases where the molded body is a film, the thickness of the film is not particularly limited, and is preferably 5 to 500 µm, more preferably 50 to 450 µm, still more preferably 100 to 400 µm.

### [Laminated body]

The present invention encompasses a laminated body comprising a biodegradable barrier layer composed of a biodegradable resin composition. Since the laminated body of the present invention comprises the biodegradable barrier layer, it has excellent biodegradability, low-temperature moldability, and oxygen barrier performance under high humidity. The laminated body of the present invention may comprise one, or two or more, biodegradable barrier layers, and in cases where the laminated body comprises two or more biodegradable barrier layers, the compositions of the respective biodegradable barrier layers may be the same or different. The form of the biodegradable barrier layer is not particularly limited, and the biodegradable barrier layer may have, for example, a film-like shape or a sheet-like shape. The laminated body may comprise another layer (a) in addition to the biodegradable barrier layer in the present invention. Examples of the other layer (a) include a resin layer, paper, and an adhesive layer. The resin layer is a resin layer having a composition different from that of the adhesive layer.

The resin constituting the resin layer is not particularly limited, and examples of the resin include: polyester-based resins such as polyethylene terephthalate (PET); polyolefin-based resins such as polypropylene (PP) [preferably biaxially oriented polypropylene (BOPP)] and polyethylene (PE) [preferably low-density polyethylene (LDPE), high-density polyethylene (HDPE), and linear low-density polyethylene (LLDPE)]; ethylene-vinyl acetate copolymers; polyvinyl alcohol-based resins such as polyvinyl alcohol resins and ethylene·α-olefin copolymers; resins having biodegradability, such as polyester-based resins having biodegradability; and resins obtained by modifying these resins with a modifier such as maleic anhydride. A single resin layer may be used, or two or more resin layers may be used in combination. From the viewpoint of enhancing biodegradability of the laminated body, the resin constituting the resin layer is preferably a polyester resin having biodegradability.

The polyester-based resin having biodegradability may be either a resin derived from petroleum or a resin derived from an organism, and examples of the polyester-based resin having biodegradability include polycaprolactone (simply referred to as PCL), polybutylene succinate (simply referred to as PBS), polyethylene succinate (simply referred to as PES), poly(butylene succinate-co-butylene adipate), polybutylene adipate terephthalate (simply referred to as PBAT), polybutylene succinate terephthalate (PBST), polyethylene adipate terephthalate (PEAT), polylactic acid (PLA), poly(3-hydroxybutyrate) homopolymers (simply referred to as PHB), poly(3-hydroxybutyrate-co-3-hydroxyhexanoate) (simply referred to as PHBH), poly(3-hydroxybutyrate-co-3-hydroxyvalerate) (simply referred to as PHBV), and poly(3-hydroxybutyrate-co-4-hydroxybutyrate) (simply referred to as 3HB4HB). A single polyester-based resin having biodegradability may be used, or two or more polyester-based resins having biodegradability may be used in combination.

The paper is not particularly limited, and examples of the paper include kraft paper, bleached kraft paper, high-quality paper, simili paper, glassine paper, parchment paper, synthetic paper, white paperboard, Manila board, base paper for milk cartons, base paper for cups, ivory paper, and silver paper.

The adhesive layer may be selected from the resins exemplified above as the resin layer, as long as the adhesive layer has an adhesive function. Examples of the adhesive layer include maleic anhydride-modified polyethylene, polyvinyl alcohol-based resins, polyester-based resins having biodegradability, and mixtures thereof. From the viewpoint of enhancing the biodegradability, polyvinyl alcohol-based resins, polyester-based resins having biodegradability, and resins composed of a mixture of these resins are preferably used.

Examples of the layer configuration of the laminated body of the present invention include layer configurations containing layers in the following orders:
"adhesive layer/biodegradable barrier layer"; "resin layer/adhesive layer/biodegradable barrier layer"; "resin layer/adhesive layer/biodegradable barrier layer/adhesive layer/resin layer"; "resin layer/regrind layer/adhesive layer/biodegradable barrier layer/adhesive layer/regrind layer/resin layer"; "resin layer/adhesive layer/biodegradable barrier layer/adhesive layer/paper", "biodegradable barrier layer/paper".
Among these, a configuration comprising "resin layer/adhesive layer/biodegradable barrier layer/adhesive layer/resin layer" in this order is preferred. A layer other than a resin layer, an adhesive layer, and a biodegradable barrier layer may be included between the respective layers and/or on an outer side thereof. However, preferably, no such other layer is included between the respective layers. In other words, the respective layers are preferably adjacent to each other. For example, in the laminated body of the present invention, a resin layer, an adhesive layer, a biodegradable barrier layer, an adhesive layer, and a resin layer are preferably arranged adjacent to each other (in other words, such that the layers are in contact with each other) in this order. Such a laminated body has excellent biodegradability, oxygen barrier performance under high humidity, and low-temperature solubility.

In one embodiment of the present invention, the thickness of the biodegradable barrier layer in the laminated body of the present invention is not particularly limited, and may be appropriately selected depending on the type of the laminated body. The thickness is preferably 1 to 1000 µm, preferably 2 to 800 µm, preferably 3 to 700 µm, more preferably 5 to 500 µm, still more preferably 10 to 200 µm, still more preferably 13 to 100 µm, especially preferably 15 to 50 µm. In cases where the thickness of the biodegradable barrier layer is within the range described above, the biodegradability, the oxygen barrier performance under high humidity, and the low-temperature solubility tend to increase. In cases where the laminated body comprises two or more biodegradable barrier layers, the above-described thickness of the biodegradable barrier layer refers to the thickness of one layer.

In one embodiment of the present invention, the thickness of the other layer (a) in the laminated body of the present invention is not particularly limited, and may be appropriately selected depending on the type of the laminated body. The thickness is preferably 1 to 3000 µm, more preferably 2 to 1000 µm, still more preferably 3 to 500 µm. In cases where the thickness of the other layer (a) is within the range described above, the biodegradability, the oxygen barrier performance under high humidity, and the low-temperature solubility tend to increase. In cases where the laminated body comprises two or more other layers (a), the above-described thickness of the other layer (a) refers to the thickness of one layer.

In one embodiment of the present invention, the thickness of the laminated body of the present invention is not particularly limited, and is preferably 20 to 5000 µm, more preferably 50 to 3000 µm, still more preferably 100 to 1000 µm. In cases where the thickness of the laminated body is within the range described above, the biodegradability, the oxygen barrier performance under high humidity, and the low-temperature solubility tend to increase.

In one embodiment of the present invention, in cases where the laminated body of the present invention comprises "resin layer/adhesive layer/biodegradable barrier layer" in this order, the thickness of the biodegradable barrier layer in the laminated body may be selected from the above-described range of the thickness of the biodegradable barrier layer. The thickness of the resin layer in the laminated body is preferably 10 to 1000 µm, more preferably 20 to 500 µm, still more preferably 30 to 300 µm, and the thickness of the adhesive layer in the laminated body may be preferably 1 to 100 µm, more preferably 2 to 50 µm, still more preferably 3 to 30 µm. In cases where the thickness of each layer is within the range described above, the biodegradability, the oxygen barrier performance under high humidity, and the low-temperature solubility tend to increase. In cases where the laminated body comprises two or more identical layers, the thickness of the respective layers (the biodegradable barrier layer, the adhesive layers, and the resin layer) in the laminated body refers to the thickness of one layer. In the present description, the thickness of a monolayer film or sheet, a laminated body, and each layer in a laminated body can be measured using a thickness gauge, and can be measured by the method described in Examples.

The laminated body of the present invention can be produced by laminating the biodegradable barrier layer and at least one other layer such as a resin layer by a conventional method such as a co-extrusion molding method (for example, a co-extrusion lamination method, a co-extrusion sheet forming method, a co-extrusion inflation forming method, or a co-extrusion blow molding method), a co-injection molding method, an extrusion lamination method, or a dry lamination method. For example, the method may be a method in which the biodegradable barrier layer and the other layer are co-extruded or laminated, or a method in which a film of the biodegradable resin composition is formed on the other layer. In the lamination, the biodegradable resin composition may be applied to a surface of the other layer, or may be extrusion-coated onto a surface of the other layer.

A laminated body comprising "resin layer/adhesive layer/biodegradable barrier layer" in this order as one embodiment of the present invention is preferably obtained by, for example, a method in which a resin forming the resin layer, an adhesive resin composition forming the adhesive layer, and the biodegradable resin composition of the present invention are co-extruded by a co-extruder. More specifically, each resin (or each resin composition) may be introduced into a hopper of each extruder and melt-kneaded, and then co-extrusion may be performed using a feedblock die. The cylinder temperature of each extruder may be appropriately selected depending on the melting temperature of each resin (or each resin composition). Although the cylinder temperature of each extruder is not limited, the cylinder temperature of the extruder for the adhesive layer may be, for example, 120 to 300°C, preferably 150 to 250°C; the cylinder temperature of the extruder for the resin layer may be, for example, 150 to 300°C, preferably 170 to 250°C; and the cylinder temperature of the extruder for the biodegradable barrier layer may be, for example, 150 to 300°C, preferably 170 to 270°C.

In one embodiment of the present invention, the laminated body of the present invention also has excellent low-temperature moldability, and can be easily molded into a predetermined shape. In one embodiment of the present invention, wrinkle formation and the like do not occur even by thermoforming. Thus, the laminated body of the present invention has excellent external appearance. The molding method is preferably melt molding. The melt molding method is not particularly limited, and examples of the method include an extrusion molding method, an injection molding method, a film extrusion method from a T-die, an inflation film-forming method, a compression molding method, a transfer molding method, a reinforced plastic molding method, a hollow molding method, a press molding method, a blow molding method, a calender molding method, a foam molding method, a vacuum forming method, and a pressure forming method. If desired, another thermoplastic resin may also be laminated by a method such as a co-extrusion molding method or a lamination molding method. By these methods, a molded body of any shape such as a film, a sheet, a tube, a bottle, a capsule, a non-woven fabric, or a fiber can be obtained. In one embodiment of the present invention, in cases where molding is performed by a vacuum forming method, the laminated body can be heated and then molded into a desired shape using a vacuum forming machine. The molding temperature is not limited, and may be appropriately selected depending on the type of the laminated body. The molding temperature is preferably 100 to 300°C, more preferably 130 to 250, still more preferably 150 to 200°C. With such a molding temperature, a molded body having excellent thermoformability tends to be formed.

### [Coated Paper]

The present invention encompasses coated paper (or covered paper) comprising the biodegradable resin composition of the present invention and paper, the paper being coated with (covered by) the composition. The coated paper of the present invention comprises paper, and a biodegradable barrier layer composed of the biodegradable resin composition, in this order. Because of the coating with the biodegradable resin composition, the coated paper of the present invention is excellent in biodegradability, and oxygen barrier performance under high humidity.

Accordingly, the coated paper of the present invention can be suitably used as a food packaging material or the like. Examples of the paper include the paper exemplified in the above section [Laminated Body]. The biodegradable resin composition may be coated on at least one side (one side or both sides) of the paper, either as a single layer or as two or more stacked layers. A conventional method may be used as a coating method. For example, a method in which extrusion coating is performed using an extruder may be suitably used. The cylinder temperature of the extruder may be, for example, 150 to 300°C, preferably 170 to 270°C.

The thickness of the paper is not particularly limited, and is preferably 10 to 1000 µm, more preferably 30 to 500 µm, still more preferably 50 to 300 µm. The thickness of the biodegradable barrier layer may be selected from the range described above. The thickness of the coated paper is preferably 15 to 1500 µm, more preferably 30 to 1000 µm, still more preferably 50 to 500 µm, still more preferably 80 to 400 µm, still more preferably 100 to 300 µm. In cases where the thickness of the paper, the biodegradable barrier layer, or the coated paper is within the range described above, the biodegradability, and the oxygen barrier performance under high humidity can be improved.

The use of the biodegradable resin composition, the laminated body, and the coated paper of the present invention is not particularly limited. They can be suitably used as a packaging material such as a food packaging material, and for agricultural use. The food packaging material is not particularly limited, and examples of the food packaging material include containers for packaging food such as meat, fresh noodle, processed food, black tea, coffee powder, coffee bean, or pickle. In a preferred embodiment of the present invention, the food packaging material may be a garbage bag for organic waste, a container for use in various events, a tea bag, a coffee capsule, or the like, and is especially suitably used as a coffee capsule. Since the biodegradable resin composition, the laminated body, and the coated paper of the present invention have degradability in a natural environment and have excellent gas barrier performance, they can be suitably used as an agricultural film. Examples of the agricultural film include a mulch film, a fumigation film, a seedling-raising film, and a covering film. In particular, the agricultural film is useful as a fumigation film among these films.

The present invention encompasses a film for food packaging or agricultural use comprising a biodegradable barrier layer composed of a biodegradable resin composition. Since the film for food packaging or agricultural use of the present invention comprises the biodegradable barrier layer, it has excellent biodegradability, low-temperature moldability, and oxygen barrier performance under high humidity. The film for food packaging of the present invention can be suitably used for the uses as a food packaging material exemplified above, and the film for agricultural use can also be suitably used for the uses exemplified above. The biodegradable barrier layer composed of the biodegradable resin composition is the same as that described in the above section [Laminated Body].

### EXAMPLES

The present invention is described below in detail by way of Examples, but the present invention is not limited thereto.

### <Test Methods>

### (1) Oxygen Transmission Rate under High Humidity

In accordance with JIS K 7126-1:2006, a single-layer film obtained in each of Examples 1 to 8 and Comparative Examples 1 to 3 was conditioned for one week under conditions of a temperature of 23°C and a relative humidity of 75%. Thereafter, oxygen transmission was measured under conditions of a temperature of 23°C and a relative humidity of 75% using a gas permeability measurement apparatus (OX-TRAN 2/22, manufactured by MOCON), and converted assuming a thickness of 20 µm for the measured single-layer film. The converted oxygen transmission was regarded as the oxygen transmission rate (OTR) (cc·20 µm/(m²·day·atm)). Further, oxygen barrier performance was evaluated according to the following indices.
A: OTR ≤ 2.0 cc·20 µm/(m²·day·atm)
B: 2.0 cc·20 µm/(m²·day·atm) < OTR ≤ 5.0 cc·20 µm/(m²·day·atm)
C: 5.0 cc·20 µm/(m²·day·atm) < OTR ≤ 10.0 cc·20 µm/(m²·day·atm)
D: 10.0 cc·20 µm/(m²·day·atm) < OTR

### (2) Melting Point

In accordance with JIS K 7121:1987, 10 mg of pellets of the composition obtained in each of Examples 1 to 8 and Comparative Examples 1 to 3 was sealed in an aluminum pan (manufactured by TA Instruments). DSC measurement was carried out by heating from -30°C to 230°C at a rate of 10°C/minute, cooling to -30°C at a rate of 10°C/min, and then heating again from -30°C to 230°C at a rate of 10°C/minute. In the obtained DSC curve, the melting point Tm (°C) was determined from the peak-top temperature of the melting peak in the temperature range from the start to the end of melting during the second heating. In the measurement, the peak-top temperature of the melting peak having the highest melting energy was defined as the melting point Tm (°C).

The melting point Tm (°C) was evaluated according to the following indices.
A: 150°C ≤ Tm ≤ 175°C
B: 175°C < Tm ≤ 180°C
C: 180°C < Tm

Further, the melting point of the PVA-based resin (A) used in each of Examples 1 to 8 and Comparative Examples 1 to 3 was determined by the same method.

### (3) Dynamic Viscoelasticity

Melt properties of the single-layer film obtained in each of Examples 1 to 8 and Comparative Examples 1 to 3 were measured using a dynamic viscoelasticity apparatus (Rheogel-E4000, manufactured by UBM Co., Ltd.). The measurement was performed at a frequency of 1 Hz under conditions where heating was performed from - 50°C to 200°C at a rate of 3°C/minute, to obtain a value of the storage elastic modulus. Further, the temperature at which the measured storage elastic modulus fell below 1000 MPa (Temp) was evaluated according to the following indices.
A: 80°C ≤ Temp < 120°C
B: 60°C ≤ Temp < 80°C, 120°C ≤ Temp < 150°C
C: 35°C ≤ Temp < 60°C, 150°C ≤ Temp < 180°C
D: 35°C > Temp, 180°C ≤ Temp

### (4) Thermoformability

A laminated body 1 obtained in each of Examples 1 to 8 and Comparative Examples 1 to 3 was heated to 180°C using a vacuum forming machine ("Formech 508DT", manufactured by Formech), and then formed into a capsule shape having a diameter of 5 cm and a depth of 3 cm. The obtained molded article was visually observed, and its thermoformability was evaluated according to the following indices.
A: Forming was possible without a problem.
B: A capsule shape was formed, but wrinkles occurred in part.
C: Forming was difficult.

### (5) Biodegradability

For the single-layer films obtained in Examples 1 to 8 and Comparative Examples 1 to 3, the biodegradation rate of the composition was determined as follows in accordance with a biodegradability evaluation method described in ISO14851:2019. To 300 mL of an inorganic medium liquid, 300 mg of acclimated sludge (a 1:1 mixture of sludge obtained from a sewage treatment plant on the test start day and sludge acclimated for one month with an aqueous PVA solution) and 30 mg of a sample were added, and the resulting mixture was incubated at 25°C for 28 days. The biodegradation rate of the composition was determined by measuring the amount of oxygen consumed for biodegradation.
A: Degree of biodegradation ≥ 70%
B: Degree of biodegradation < 70%

### (6) Thickness

The thicknesses of the single-layer films, the laminated bodies 1 to 4, and each layer in the laminated bodies 1 to 4, obtained in Examples 1 to 8 and Comparative Examples 1 to 3, were measured using a digital micrometer.

### (7) Weight-Average Molecular Weight of Modified Starch (B)

The weight-average molecular weight of the modified starch (B) was calculated using GPC (gel permeation chromatography, "HLC-8320GPC", manufactured by Tosoh Corporation) by drawing a calibration curve with pullulan.

### (8) SP Value of Compound Used for Preparation of Modified Starch (B)

The SP value of the compound used for preparation of the modified starch (B) was calculated using the Fedors equation, which is described in Polym. Eng. Sci., 14[2], 147 (1974).

### (9) Glass Transition Temperature (Tg) of Polyol Plasticizer (C)

The glass transition temperature (Tg) of the polyol plasticizer (C) was measured in accordance with JIS K7121:1987 using a differential scanning calorimeter (manufactured by TA Instrument) under nitrogen at a heating rate of 10°C/min. As the glass transition temperature, the midpoint glass transition temperature was employed.

### <Polyvinyl Alcohol-Based Resin (A)>

### Production Example 1

### [Production of Vinyl Alcohol Polymer (A-1)]

Into a separable flask equipped with a stirrer, a nitrogen inlet, and an initiator addition port, 810 parts by mass of vinyl acetate and 990 parts by mass of methanol were charged, and the temperature was increased to 60°C. Thereafter, nitrogen bubbling was performed for 30 minutes to replace the atmosphere in the system with nitrogen. After adjusting the internal temperature of the flask to 60°C, polymerization was started by adding 0.5 parts by mass of AIBN. The polymerization rate reached 60% 3.2 hours after the start of polymerization. At this time, 1000 parts by mass of methanol was added, and then the polymerization was stopped by cooling. Unreacted vinyl acetate monomers were removed to obtain a solution of PVAc in methanol. Methanol was added to the obtained PVAc solution to adjust the concentration of PVAc to 25% by mass. To 400 parts by mass of the resulting solution of PVAc in methanol (100 parts by mass of PVAc in the solution), 4.6 parts by mass (molar ratio [MR] 0.01 to vinyl acetate units in PVAc) of an alkali solution (10% by mass solution of NaOH in methanol) was added, and saponification was performed at 40°C. The gelled product after the alkali addition was pulverized using a pulverizer, and saponification reaction was performed for a total of 1 hour. Thereafter, 1000 parts by mass of methyl acetate was added to the reaction product to neutralize the residual alkali. Using a phenolphthalein indicator, completion of the neutralization was confirmed. Thereafter, the product was filtered to obtain PVA as a white solid, and 1000 parts by mass of methanol was added thereto, followed by leaving the mixture to stand at room temperature for 3 hours for washing. After repeating the washing operation three times, centrifugal deliquoring was performed. The obtained PVA was dried by leaving it to stand in a dryer at 70°C for 2 days, to obtain a vinyl alcohol polymer (A-1) having a viscosity-average degree of polymerization (which may be simply referred to as DP) of 800, a degree of saponification of 88.0 mol%, and a melting point of 188°C.

### Production Example 2

### [Production of Ethylene-Vinyl Alcohol Copolymer (A-2)]

A continuous polymerization tank equipped with a reflux condenser, a raw material supply line, a reaction liquid take-out line, a thermometer, a nitrogen inlet, an ethylene inlet, and a stirring blade was used. Vinyl acetate, methanol, and 1% solution of n-propylperoxydicarbonate in methanol as an initiator were continuously supplied to the continuous polymerization tank at 626 L/hr, 216 L/hr, and 30.3 L/hr, respectively, using metering pumps. The ethylene pressure in the polymerization tank was adjusted to 0.69 MPa. The polymerization liquid was continuously taken out from the continuous polymerization tank such that the liquid level in the polymerization tank was kept constant. The polymerization rate at an outlet of the continuous polymerization tank was adjusted to 67%. The residence time in the continuous polymerization tank was 5 hours. The temperature at the outlet of the continuous polymerization tank was 60°C. The polymerization liquid was recovered from the continuous polymerization tank, and the residual vinyl acetate (which may be hereinafter simply referred to as "VAc") was removed by introducing methanol vapor into the polymerization liquid while the polymerization liquid was heated at 75°C in a warm-water bath. By this, a solution of an ethylene-vinyl ester copolymer in methanol was obtained. Subsequently, saponification reaction was performed at 40°C for 1 hour. In the reaction, the water content of the system to be subjected to the saponification step was set to 0.5%, and sodium hydroxide was used as a saponification catalyst at a molar ratio of 0.02 with respect to the ethylene-vinyl ester copolymer. The obtained polymer was washed by immersion in methanol. Subsequently, the solvent was removed by centrifugation, and then the polymer was dried to obtain an ethylene-vinyl alcohol copolymer (A-2) having an ethylene unit content (which may be referred to as an Et modification level) of 10 mol%, a viscosity-average degree of polymerization of 400, a degree of saponification (which may be simply referred to as DS) of 98.5 mol%, and a melting point of 210°C.

### Production Example 3

### [Ethylene-Vinyl Alcohol Copolymer (A-3)]

EVAL (registered trademark) F171B (ethylene content, 32 mol%; melting point, 183°C) was provided as an ethylene-vinyl alcohol copolymer (A-3) and used in the following experiments.

### Production Example 4

### [Production of Vinyl Alcohol Polymer (A-4)]

In the same manner except that a different ratio of vinyl acetate to methanol, a different polymerization condition regarding the polymerization rate, and a different saponification condition regarding the amount of alkali solution added were employed, a vinyl alcohol polymer (A-4) having a viscosity-average degree of polymerization of 1700, a degree of saponification of 88 mol%, and a melting point of 188°C was obtained.

### <Modified Starch (B)>

As the modified starch (B), the following was used.
· Modified starch (B-1): CAPSUL (registered trademark) (Ingredion); corn starch modified with octenyl succinic acid; weight-average molecular weight, 32,000; amylose content, 1% by mass; obtained from Ingredion.

The SP value of the octenyl succinic acid was 10.4.
· Modified starch (B-2): N-Creamer 46 (registered trademark) (Ingredion); waxy corn starch modified with octenyl succinic acid; amylose content, 1% by mass; obtained from Ingredion.

### <Polyol Plasticizer (C)>

As the polyol plasticizer (C), the following was used.
· Polyol plasticizer (C-1): trehalose; Tg = 120°C; obtained from Hayashibara Co., Ltd.
· Polyol plasticizer (C-2): sorbitol; Tg = -4°C; obtained from FUJIFILM Wako Pure Chemical Corporation.
· Polyol plasticizer (C-3): maltitol; Tg = 47°C; obtained from FUJIFILM Wako Pure Chemical Corporation.

### [Example 1]

Using a twin-screw extruder KZW15-45MG (D = 15 mm (diameter); L/D = 45; manufactured by Technovel Corporation), 40 parts by mass (dry mass) of the vinyl alcohol polymer (A-1) obtained in Production Example 1, 10 parts by mass (dry mass) of the modified starch (B-1), and 50 parts by mass (dry mass) of the polyol plasticizer (C-1) were melt-kneaded under the conditions described below. Subsequently, the melt-kneaded product was extruded from a strand nozzle, and the obtained strand was cooled and then cut to obtain pellets of a biodegradable resin composition.

**[Table 1]**

| <Temperature profile> | | | | | | |
|---|---|---|---|---|---|---|
| C1 | C2 | C3 | C4 | C5 | C6 | Die |
| 50 | 80 | 130 | 185 | 185 | 185 | 185 |

| | | | | | | |
|---|---|---|---|---|---|---|
| Screw rotation speed: 250 rpm Discharge: 3.5 kg/h Operating mode: co-rotating, fully intermeshing type | | | | | | |

### <Single-Layer Film>

The pellet of the biodegradable resin composition obtained above was compression-molded for 1 minute under conditions of a mold temperature of 190°C and a load of 100 kgf/cm² using a compression molding machine, to produce a single-layer film having a thickness of about 300 µm. For the obtained single-layer film, the oxygen transmission rate under high humidity, the degree of biodegradation, and the storage elastic modulus were measured in accordance with the above evaluation methods.

### <Laminated Body 1>

A laminated body of five layers including three types of layers in which "resin layer/adhesive layer/biodegradable barrier layer/adhesive layer/resin layer" are stacked in this order was prepared by the following method.

Pellets of the biodegradable resin composition obtained above, pellets of an adhesive resin composition (a composition obtained by kneading 40 parts by mass of a polyvinyl alcohol-based resin (KURARAY POVAL (registered trademark) "3-88") / 60 parts by mass of polybutylene adipate terephthalate (PBAT) ("Ecoflex C1200", manufactured by BASF) using a twin-screw extruder), and polylactic acid (Ingeo (registered trademark) "biopolymer 2003D", manufactured by Natureworks) were charged into hoppers of single-screw extruders ("VGM25-28EX", manufactured by G. M. ENGINEERING), respectively, and co-extruded at a flow rate of 5 kg/h using a feed block die, to obtain a laminated body 1 having a width of 20 cm, which has five layers including three types of layers. At this time, cylinder temperatures were set as follows.

### (Cylinder Temperatures)

Adhesive layer: 180°C, biodegradable barrier layer: 185°C, resin layer: 220°C

The configuration (from the outside) of the obtained laminated body 1 was "resin layer/adhesive layer/biodegradable barrier layer/adhesive layer/resin layer" = "250 µm/20 µm/30 µm/20 µm/250 µm (thickness)". The laminated body had no interfacial delamination, and had good biodegradability and barrier performance.

### <Comparative Example 1>

Pellets of a biodegradable resin composition was obtained by the same method as in Example 1 except that a different type of polyvinyl alcohol polymer (A) was used and the temperatures set for C4 to the die in the above temperature profile were 195°C. Using the obtained pellet, a single-layer film was obtained by the same method as in Example 1 except that the mold temperature was 210°C. Further, a laminated body 1 was produced by the same method as in Example 1 except that the cylinder temperature of the biodegradable barrier layer was 210°C. The laminated body 1 was then subjected to evaluation. The results are shown in Table 2.

### <Examples 2 to 8 and Comparative Examples 2 and 3>

Pellets of the biodegradable resin compositions of Examples 2 to 8 and Comparative Examples 2 to 3 were obtained by the same method as in Example 1 except that the type and the content of the polyvinyl alcohol polymer (A), the type and the content of the modified starch (B), and the type and the content of the polyol plasticizer (C) were as shown in Table 2. Using the obtained pellets, single-layer films and laminated bodies 1 were produced and evaluated. The results are shown in Table 2.

### <Laminated Body 2>

A laminated body of five layers including three types of layers in which "resin layer/adhesive layer/biodegradable barrier layer/adhesive layer/resin layer" are stacked in this order was prepared by the following method.

Pellets of the biodegradable resin composition obtained in Example 1, pellets of an adhesive resin composition (a composition obtained by kneading 40 parts by mass of a polyvinyl alcohol-based resin (KURARAY POVAL (registered trademark) "3-88") / 60 parts by mass of polybutylene adipate terephthalate (PBAT) ("Ecoflex C1200", manufactured by BASF) using a twin-screw extruder), and pellets of polybutylene adipate terephthalate (PBAT) ("Ecoflex C1200", manufactured by BASF) were charged into hoppers of single-screw extruders ("VGM25-28EX", manufactured by G. M. ENGINEERING), respectively, and co-extruded at a flow rate of 1 kg/h using a feed block die, to obtain a laminated body 2 having a width of 20 cm, which has five layers including three types of layers. At this time, cylinder temperatures were set as follows.

### (Cylinder Temperatures)

Adhesive layer: 180°C, biodegradable barrier layer: 185°C, resin layer: 180°C

The configuration (from the outside) of the obtained laminated body 2 was "resin layer/adhesive layer/biodegradable barrier layer/adhesive layer/resin layer" = "35 µm/5 µm/15 µm/5 µm/35 µm (thickness)". The laminated body had no interfacial delamination, and had good biodegradability and barrier performance.

### <Laminated Body 3>

A laminated body of five layers including three types of layers in which "resin layer/adhesive layer/biodegradable barrier layer/adhesive layer/resin layer" are stacked in this order was prepared by the following method.

Pellets of the biodegradable resin composition obtained in Example 1, pellets of a low-density polyethylene ("NOVATEC (registered trademark) LD" "LC522", manufactured by Japan Polyethylene Corporation), and pellets of an adhesive resin ("ADMER (registered trademark)" "HE050", manufactured by Mitsui Chemicals, Inc) were charged into hoppers of single-screw extruders ("VGM25-28EX", manufactured by G. M. ENGINEERING), respectively, and co-extruded at a flow rate of 1 kg/h using a feed block die, to obtain a laminated body 3 having a width of 20 cm, which has five layers including three types of layers. At this time, cylinder temperatures were set as follows.

### (Cylinder Temperatures)

Adhesive layer: 200°C, biodegradable barrier layer: 190°C, resin layer: 200°C

The configuration (from the outside) of the obtained laminated body was "resin layer/adhesive layer/biodegradable barrier layer/adhesive layer/resin layer" = "30 µm/30 µm/40 µm/30 µm/30 µm (thickness)". The laminated body had no interfacial delamination, and had barrier performance.

### <Laminated Body 4 (Coated Paper)>

By the following method, a laminated body (coated paper) in which "paper layer/biodegradable barrier layer" are stacked in this order was produced.

Pellets of the biodegradable resin composition obtained in Example 1 was charged into a single-screw extruder ("VGM25-28EX", manufactured by G. M. ENGINEERING), melt-kneaded at a cylinder temperature of 185°C, and extruded from a die having a width of 150 mm, to perform extrusion coating on bleached kraft paper (100-µm thickness, 70 g/m²). The configuration of the obtained laminated body 4 was "paper layer/biodegradable barrier layer" = "100 µm/20 µm". The laminated body had no interfacial delamination, and had good biodegradability and barrier performance.

**[Table 2]**

| | | Example 1 | Example 2 | Example 3 | Example 4 | Example 5 | Example 6 | Example 7 | Example 8 |
|---|---|---|---|---|---|---|---|---|---|
| Polyvinyl alcohol-based resin (A) | Type | A-1 | A-1 | A-1 | A-1 | A-4 | A-1 | A-1 | A-1 |
| | Melting point (°C) | 188 | 188 | 188 | 188 | 176 | 188 | 188 | 188 |
| | Modified group (modification level) | | | | | | | | |
| | Content (parts by mass) | 40 | 30 | 20 | 10 | 40 | 40 | 48 | 40 |
| Modified starch (B) | Type | B-1 | B-1 | B-1 | B-1 | B-1 | B-2 | B-1 | B-1 |
| | Content (parts by mass) | 10 | 20 | 30 | 40 | 10 | 10 | 12 | 10 |
| Polyol plasticizer (C) | Type | C-1 | C-1 | C-1 | C-1 | C-1 | C-1 | C-1 | C-1/C-3 |
| | Content (parts by mass) | 50 | 50 | 50 | 50 | 50 | 50 | 40 | 45/5 |
| Melting point (°C) | | A (167) | A (169) | A (172) | B (176) | A (171) | A (167) | A (168) | A (168) |
| Temperature at which storage elastic modulus (E') falls below 1000 MPa (°C) | | A (83) | A (92) | B (141) | C (150) | B (75) | B (70) | C (51) | C (48) |
| Biodegradability | | A (90%<) | A (90%<) | A (90%<) | A (90%<) | A (90%<) | A (90%<) | A (90%<) | A (90%<) |
| Oxygen Transmission Rate under High Humidity (23°C, 75% RH) (cc·20 µm/(m²·day·atm) | | A (0.42) | A (1.51) | A (1.67) | B (2.5) | A (1.15) | A (1.91) | B (3.17) | A (1.71) |
| Low-temperature moldability | | A | A | A | A | A | A | A | A |

**[Table 3]**

| | | Comparative Example 1 | Comparative Example 2 | Comparative Example 3 |
|---|---|---|---|---|
| Polyvinyl alcohol-based resin (A) | Type | A-2 | A-3 | A-1 |
| | Melting point (°C) | 210 | 183 | 188 |
| | Modified group (modification level) | Ethylene modification (10 mol%) | Ethylene modification (32 mol%) | - |
| | Content (parts by mass) | 40 | 40 | 40 |
| Modified starch (B) | Type | B-1 | B-1 | B-1 |
| | Content (parts by mass) | 10 | 10 | 10 |
| Polyol plasticizer (C) | Type | C-1 | C-1 | C-2 |
| | Content (parts by mass) | 50 | 50 | 50 |
| Melting point (°C) | | C (200<) | B (179) | A (168) |
| Temperature at which storage elastic modulus (E') falls below 1000 MPa (°C) | | A (89) | A (86) | D (30>) |
| Biodegradability | | B | B | A |
| Oxygen Transmission Rate under High Humidity (23°C, 75% RH) (cc·20 µm/(m²·day·atm) | | A (1.29) | A (1.09) | D (20<) |
| Low-temperature moldability | | C | A | A |

As shown in Table 2, the biodegradable resin compositions obtained in Examples 1 to 8 were evaluated as having good biodegradability, low-temperature moldability, and oxygen barrier performance under high humidity. On the other hand, the biodegradable resin compositions obtained in Comparative Examples 1 to 3 were confirmed to show poor results in at least one of the evaluations of biodegradability, low-temperature moldability, and oxygen transmission rate under high humidity. Therefore, the biodegradable resin compositions of the present invention were confirmed to be excellent in biodegradability, low-temperature moldability, and oxygen barrier performance under high humidity.

## Claims

1. A biodegradable resin composition comprising: a polyvinyl alcohol-based resin (A); a modified starch (B); and a polyol plasticizer (C); wherein the composition has a melting point of not more than 180°C, and wherein a temperature at which a storage elastic modulus of the composition falls below 1000 MPa is not less than 35°C and less than 180°C.

2. The biodegradable resin composition according to claim 1, wherein the polyvinyl alcohol-based resin (A) has a melting point of not more than 200°C.

3. The biodegradable resin composition according to claim 1 or 2, wherein a content of the modified starch (B) is not less than 0.5% by mass with respect to a mass of the biodegradable resin composition.

4. The biodegradable resin composition according to claim 1 or 2, wherein Tg of the polyol plasticizer (C) is not less than 50°C.

5. The biodegradable resin composition according to claim 1 or 2, wherein the polyol plasticizer (C) comprises trehalose.

6. The biodegradable resin composition according to claim 1 or 2, wherein a content of the polyol plasticizer (C) is 5 to 80% by mass with respect to a mass of the biodegradable resin composition.

7. A molded body comprising the biodegradable resin composition according to claim 1 or 2.

8. The molded body according to claim 6, which is a film.

9. A laminated body comprising a biodegradable barrier layer composed of the biodegradable resin composition according to claim 1 or 2.

10. Coated paper comprising the biodegradable resin composition according to claim 1 or 2 and paper, the paper being coated with the composition.

11. A film for food packaging or agricultural use, comprising a biodegradable barrier layer composed of the biodegradable resin composition according to claim 1 or 2.
